# EUROPÄISCHE PATENTANMELDUNG

(11) **EP 0 530 385 A1**
(43) Veröffentlichungstag der Anmeldung: **10.03.1993**
(21) Anmeldenummer: 91114040.8
(22) Anmeldetag: 22.08.1991
(51) Int. Cl.: G03B 23/18

(54) **Überblendprojektor**

(71) Anmelder: REFLECTA GMBH FOTO FILM PROJEKTION, D-91126 Schwabach (DE)
(72) Erfinder: Kronbauer, Hermann, W-8011 Aschheim (DE); Rehm, Christian, W-8000 München 82 (DE)
(74) Vertreter: LOUIS, PÖHLAU, LOHRENTZ & SEGETH

(57) **Zusammenfassung**

Es wird ein Überblendprojektor (10) mit zwei Bildwerfern (12) beschrieben, von welchen jeder ein Objektiv (14), ein Beleuchtungssystem (16) und eine Diabühne (18) aufweist. Der Überblendprojektor (10) weist ausserdem eine Diamagazin-Führung (20) und eine Diawechseleinrichtung (28) auf, wobei sich die Diamagazin-Führung (20) zwischen den beiden Objektiven (14) in Richtung der optischen Achsen (22) der Objektive (14) erstreckt. Die Diamagazin-Führung (20) ist zur Aufnahme eines beidseitig entnehmbaren Diamagazins (24) vorgesehen. Die Diawechseleinrichtung (28) weist einen Querschieber (30) auf, der beiden voneinander abgewandten Seiten der Diamagazin-Führung (20) zugeordnet ist.

## Beschreibung

Die Erfindung betrifft einen Überblendprojektor mit zwei Bildwerfern, von welchen jeder ein Objektiv, ein Beleuchtungssystem und eine zwischen dem entsprechenden Objektiv und dem zugehörigen Beleuchtungssystem vorgesehene Diabühne aufweist, und mit einer Führung für ein Diamagazin und einer Einrichtung zum Diawechsel zwischen dem Diamagazin und der einen oder anderen Diabühne, wobei sich die Führung für das Diamagazin in Richtung der optischen Achsen der Objektive erstreckt.

Ein derartiger Überblendprojektor ist aus der DE-PS 35 17 376 bekannt. Dort sind die jeweils aus der entsprechenden Diabühne und dem zugehörigen Beleuchtungssystem bestehenden Projektionseinheiten entlang den optischen Achsen der Objektive verschiebbar, um einen Diawechsel in den jeweiligen Bildwerfern zu ermöglichen. Der für die jeweiligen Projektionseinheiten erforderliche Verschiebeweg bedingt bei diesem bekannten Überblendprojektor einen Totraum, so dass der Überblendprojektor entsprechend voluminös gestaltet sein muss. Ausserdem müssen bei einem Diawechsel die relativ grossen Massen der aus Diabühne und Beleuchtungssystem bestehenden Projektionseinheiten, bewegt werden.

Deshalb wird in der DE-PS 36 22 114 ein Überblendprojektor mit zwei Bildwerfern beschrieben, von welchen jeder ein Objektiv, eine Diabühne und ein Beleuchtungssystem aufweist. Dieser Überblendprojektor besitzt ausserdem eine Führung für ein Diamagazin und eine Einrichtung zum Diawechsel. Dort sind die bei einem Diawechsel zu bewegenden Massen relativ klein. Ausserdem ist es möglich, diesen bekannten Überblendprojektor vergleichsweise platzsparend zu gestalten. Das wird dadurch erzielt, dass die Führung für das Diamagazin quer zu den optischen Achsen der beiden Bildwerfer orientiert ist, dass zwischen den beiden Bildwerfern ein parallel zu den optischen Achsen verschiebbarer Hauptschieber zur Entnahme eines Dias aus dem Diamagazin für eine Projektion und zur Eingabe eines Dias in das Diamagazin nach der Projektion angeordnet ist, dass in der Verschiebungsstrecke des Hauptschiebers eine Diadreheinrichtung mit einer vertikalen Drehachse vorgesehen ist zum Drehen der in die Diadreheinrichtung eingeführten Dias um 90 Winkelgrad, und dass jeder Diabühne ein Querschieber zugeordnet ist zum Wechseln eines Dias zwischen der jeweiligen Diabühne und der Diadreheinrichtung. Bei diesem bekannten Überblendprojektor ist es demzufolge erforderlich, die Bewegung des Hauptschiebers mit der Bewegung der Diadreheinrichtung sowie mit der Bewegung der beiden Querschieber genau abzustimmen, um eine zuverlässige Funktionsweise des Überblendprojektors zu gewährleisten. Das bedingt einen nicht zu vernachlässigenden Steuerungs- und Antriebsaufwand.

Der Erfindung liegt die Aufgabe zugrunde, einen Überblendprojektor der eingangs genannten Art zu schaffen, der sehr einfach und betriebszuverlässig und darüberhinaus platzsparend ausgebildet ist, und bei dem ausserdem die zu bewegenden Massen klein sind.

Diese Aufgabe wird bei einem Überblendprojektor der eingangs genannten Art dadurch gelöst, dass die Diamagazin-Führung sich zwischen den beiden voneinander beabstandeten Objektiven erstreckt, dass die Diawechseleinrichtung einen Querschieber aufweist, der beiden voneinander abgewandten Seiten der Führung für das Diamagazin zugeordnet ist, und dass die Diamagazin-Führung für ein beidseitig entnehmbares Diamagazin vorgesehen ist.

Durch eine derartige Ausbildung des Überblendprojektors ergeben sich die Vorteile, dass die Diawechseleinrichtung einfach und platzsparend ausgebildet sein kann, dass die bewegten Massen zum Diawechsel gering sind, dass der volumenbedarf für den Überblendprojektor gering ist, und dass eine gute Betriebszuverlässigkeit des Überblendprojektors gewährleistet ist. Alle diese Vorteile resultieren insbes. daraus, dass das im Überblendprojektor zur Anwendung gelangende Diamagazin derartig ausgebildet ist, dass es im Unterschied zu den bislang bekannten Diamagazinen nicht nur einseitig sondern beidseitig entnehmbar ausgebildet ist. Ein derartiges Diamagazin ist bspw. in der Patentanmeldung P.... bzw. in der Patentanmeldung P....gleichen Anmeldetags offenbart.

Der erfindungsgemässe Überblendprojektor ist vorzugsweise mit einer Diamagazin-Führung für ein beidseitig entnehmbares, verschüttsicheres Diamagazin vorgesehen. Derartige verschüttsichere Diamagazine sind in den beiden oben erwähnten Patentanmeldungen P....und P....gleichen Anmeldetags beschrieben.

Eine einfache und betriebszuverlässige Ausbildung des Überblendprojektors ergibt sich, wenn die Diamagazinführung sich entlang der Symmetrielinie zwischen den beiden Objektiven erstrecken. Dann ist es nämlich möglich, die Einzelteile des Überblendprojektors im wesentlichen gleich auszubilden und entsprechend spiegelbildlich anzuordnen, was in vorteilhafter Weise einen vergleichsweise kleinen Herstellungsaufwand bedeutet. Diesem Zweck dient es auch, wenn der Querschieber zwei einander zugeordnete, miteinander verbundene, spiegelbildlich symmetrisch ausgebildete Endabschnitte aufweist.

Weitere Einzelheiten, Merkmale und Vorteile ergeben sich aus der nachfolgenden Beschreibung eines in der Zeichnung angedeuteten Ausführungsbeispieles des erfindungsgemässen Überblendprojektors. Es zeigt:
- Fig. 1: eine Draufsicht auf eine schematische Darstellung des Überblendprojektors, wobei die wesentlichen Einzelteile des Überblendprojektors über- und nebeneinander sichtbar angedeutet sind, und
- Fig. 2: eine Ansicht des Überblendprojektors in Richtung des Pfeiles II in Fig. 1, wobei ebenfalls wieder wichtige Einzelteile des Überblendprojektors über- bzw. nebeneinander sichtbar verdeutlicht sind.

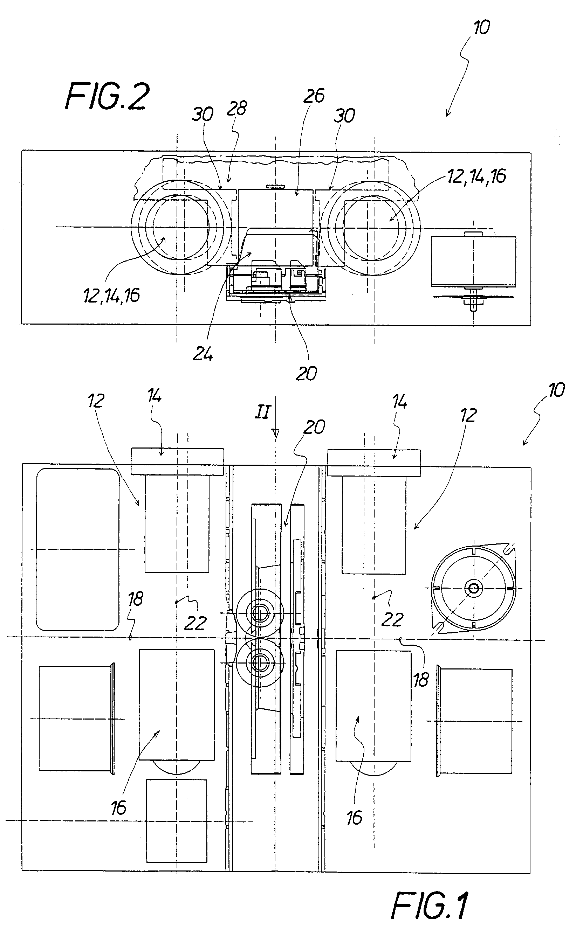

Fig. 1 zeigt schematisch den Überblendprojektor 10 mit zwei Bildwerfern 12, von denen jeder ein Objektiv 14, ein Beleuchtungssystem 16 und eine zwischen dem entsprechenden Objektiv 14 und dem zugehörigen Beleuchtungssystem vorgesehene Diabühne aufweist. Die beiden seitlichen Diabühnen sind in Fig. 1 nur durch ihre Mittellinie 18 als strichpunktierte dünne Linie angedeutet. Mit der Bezugsziffer 20 ist eine Diamagazin-Führung bezeichnet, die sich zwischen den beiden voneinander beabstandeten Objektiven 14 erstreckt, d.h. die mittig zwischen den beiden Objektiven 14 vorgesehen und zu den beiden optischen Achsen 22 der Bildwerfer 12 parallel ausgerichtet ist. Die Diamagazin-Führung 20 ist zur Aufnahme und zum Transport eines Diamagazines 24 (sh.Fig.2) geeignet, aus dem Dias 26 sowohl nach der einen als auch nach der entgegengesetzten anderen Seite entnehmbar sind. Zu diesem Zweck weist der Überblendprojektor 10 eine Diawechseleinrichtung 28 mit einem Querschieber 30 (sh. Fig. 2) auf. Von dem besagten Querschieber 30 sind nur die beiden einander zugewandten und zur Mittellinie 18 der Diabühne parallelen bzw. mit dieser fluchtend vorgesehenen Endabschnitte durch dünne strichlierte Linien angedeutet, die miteinander einstückig verbunden sind.

In den Figuren 1 und 2 sind gleiche Einzelheiten mit denselben Bezugsziffern bezeichnet, so dass es sich erübrigt, in Verbindung mit den beiden Figuren alle Einzelheiten jeweils detailliert zu beschreiben. Fig. 2 zeigt an der Diamagazin-Führung 20 ein verschüttsicheres Diamagazin 24, wie es in der Patentanmeldung P....gleichen Anmeldetages beschrieben ist.

## Patentansprüche

1. Überblendprojektor mit zwei Bildwerfern (12), von welchen jeder ein Objektiv (14), ein Beleuchtungssystem (16) und eine zwischen dem entsprechenden Objektiv (14) und dem zugehörigen Beleuchtungssystem (16) vorgesehene Diabühne (18) aufweist, und mit einer Führung (20) für ein Diamagazin (24) und einer Einrichtung (28) zum Diawechsel zwischen dem Diamagazin (24) und der einen oder anderen Diabühne (18), wobei sich die Führung (20) für das Diamagazin (24) in Richtung der optischen Achsen (22) der Objektive (14) erstreckt,
**dadurch gekennzeichnet**,
dass die Diamagazin-Führung (20) sich zwischen den beiden voneinander beabstandeten Objektiven (14) erstreckt, dass die Diawechseleinrichtung (28) einen Querschieber (30) aufweist, der beiden voneinander abgewandten Seiten der Führung (20) für das Diamagazin (24) zugeordnet ist, und dass die Diamagazin-Führung (20) für ein beidseitig entnehmbares Diamagazin (24) vorgesehen ist.

2. Überblendprojektor nach Anspruch 1,
**dadurch gekennzeichnet**,
dass die Diamagazin-Führung (20) für ein beidseitig entnehmbares verschüttsicheres Diamagazin (24) vorgesehen ist.

3. Überblendprojektor nach Anspruch 1 oder 2,
**dadurch gekennzeichnet**,
dass die Diamagazin-Führung (20) sich entlang der Symmetrielinie zwischen den beiden Objektiven (14) erstreckt.

4. Überblendprojektor nach einem der vorhergehenden Ansprüche,
**dadurch gekennzeichnet**,
dass der Querschieber (30) zwei einander zugewandte, miteinander verbundene, spiegelbildlich symmetrisch ausgebildete Endabschnitte aufweist.
